# EUROPEAN PATENT SPECIFICATION

(11) **EP 0 577 097 B1**
(45) Date of publication and mention of the grant of the patent: **09.04.1997**
(21) Application number: 93110432.7
(22) Date of filing: 30.06.1993
(51) Int. Cl.: B60J 7/185, B60J 7/053

(54) **Locking device for roofs of motor-vehicles or the like**
Verriegelungsvorrichtung für Autodächer oder ähnliches
Dispositif de verrouillage pour toits de véhicules automobiles ou similaires

(30) Priority: 03.07.1992 IT MI920667 U
(43) Date of publication of application: 05.01.1994
(73) Proprietor: ZANI S.R.L, I-25066 Lumezzane (Brescia) (IT)
(72) Inventor: Zani, Bruno, I-25066 Lumezzane (IT); Zani, Duilio, I-25066 Lumezzane (IT)
(74) Representative: Lecce, Giovanni

(56) References cited:
- EP-A- 0 480 166
- US-A- 4 893 869

## Description

The invention refers to a locking device for roofs of motor-vehicles or the like, basically constituted by one or more sloping or horizontal flat grooves, with connected or sloping stress raiser, stress raiser openings, either constructed or inserted on the fixed structures of the guide-sections, lateral with respect to the central slide housings of the supporting mobile carriages which restrain and regulate the opening and/or closure of roofs for motor-vehicles or the like.

In said groove or grooves engage, during the closure, the side protruding ends of the orthogonal pins provided at the ends of levers moving the openable roofs, such as, for instance, the circular serrated sector levers engaging the racks integral with said sliding carriages.

The engagement of said ends in said grooves and their sliding along the sloping connections or stress raisers, or in the sloping direction of the grooves, cause the orthogonal pins of the circular serrated sector levers, or the like, and the relevant shaped levers to which the roofs are connected, to shift downwards, and cause also the pressure tightness, during the closure, of said roofs on the peripheral gaskets.

The sloping or horizontal flat grooves with connected or sloping stress raiser, are provided on the sides of the lateral slides of the opening and closure means of the roofs and are preferably located in the front half of the open compartments occupied by said roofs.

As known, openable roofs for motor-vehicles or the like, besides having opening, control and closing means, are provided also with additional hooking means which, during the closure, engage fixed complementary means, to constitute a stable lock suitable to ensure the impossibility of unintentional openings and/or undesirable vibrations.

Such hooking means are constituted in most cases by hooks or the like which, when the roofs are fully lowered, are caused to slide axially until they engage their shaped ends into complementary eyelets provided on the roofs; they are preferably located on the rear ends of the guide sections of the control sliding devices.

US-A-4 893 869 discloses a locking device for motor-vehicle roofs corresponding to the preamble of claim 1 and comprising at least a pin or a mobile side extension associated to a corresponding fixed side groove provided with a stress raiser and with an upper internal wall which is horizontal flat and connected to a sloping stress raiser.

The known locking devices, while being regular from the functional point of view, are rather complex and made up by many components that complicate the construction, assembly and maintenance of the roofs.

Object of this invention is the elimination of the above drawbacks. According to the present invention, the above object is achieved by the features in the characterizing part of claim 1. The results obtained by the locking device for roofs of motor-vehicles and the like of the present invention are: the same mobile carriages that cause the raising of the rear part of the roofs and that permit their axial sliding during the opening and/or closing stages, are provided with extensions which, during the closure, engage and cause the progressive axial downwards translation of the roofs connected to them; said translation is a natural consequence, a function of the axial motion of mobile carriages in general, and in particular of those equipped with racks to which circular serrated sector levers are coupled, which, during the translation, rotate and raise the roofs through their engagement in racks provided in the support shaped levers of said roofs; the engagement of said extensions, with the related fixed lateral sloping or horizontal flat grooves with connected or sloping stress raiser, develops during the end rotation stage of said circular serrated sector levers or the like and during the sequential end stage of axial translation of the mobile carriages.

The advantages obtained through these devices lie basically in that the whole structure of the safety closing systems of the openable roofs is much simpler, even though highly effective, and easier to be realized, assembled and kept efficient.

Another advantage lies in that said devices may be single, for each side, or double, in function of the two ends protruding from the pins of the mobile levers or the circular sector levers, or their number may be even greater and/or their location different in function of additional plates sliding on the support shaped levers of the roofs, provided with more side pins protruding from one side or from both sides, engaged with the protruding pins of said circular serrated sector levers or the like, and matchable with as many fixed side sloping or horizontal flat grooves with connected or sloping stress raiser, in function of the number of said protruding pins.

The invention is described more in detail in the following, according to preferred non limitative embodiments, with reference to the attached drawings, wherein:
Fig. 1 is a prospectic scheme of the device,
Fig, 2 is a side view of the same device in half-hooking position,
Fig. 3 is a side view of the same device in fully closed position,
Fig. 4 is the plan of an example of multiple locking device, and
Fig. 5 is the side view of the detail of a plate for multiple locking devices.

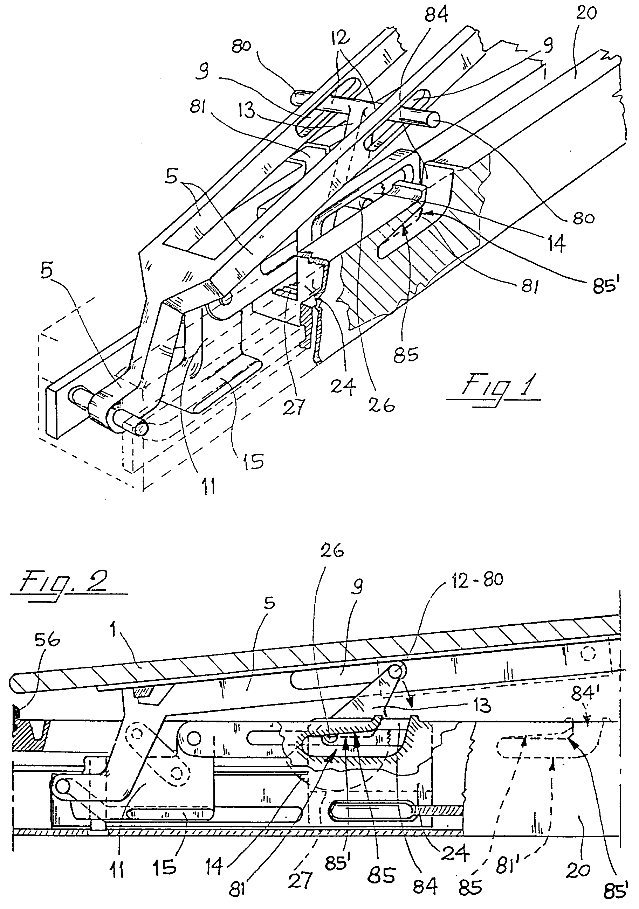

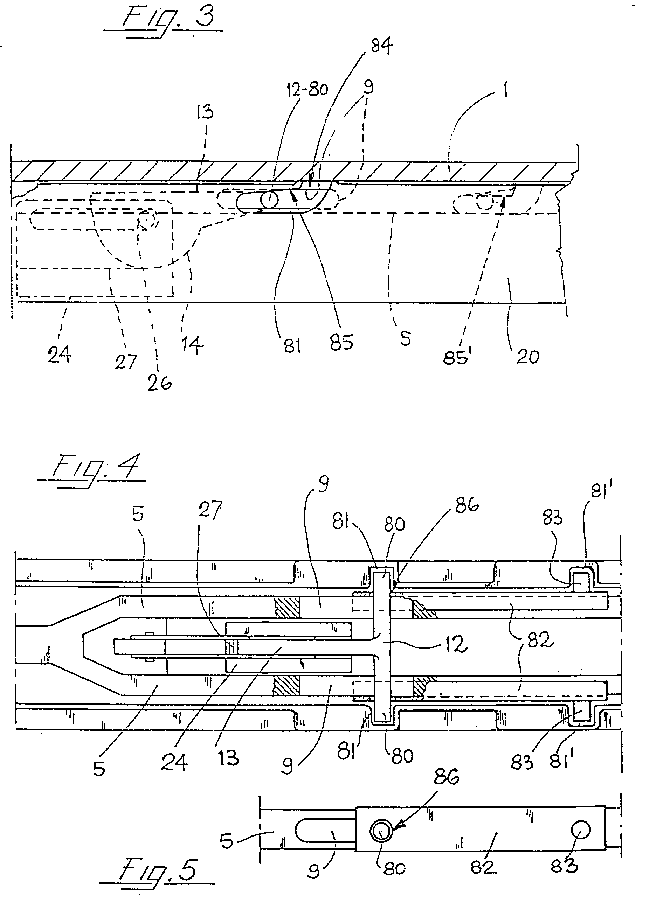

The drawings illustrate a locking device for roofs of motor-vehicles and the like, basically constituted by protruding end pins (80) which, during the closure, engage and press fixed side grooves (81).

For the sake of clearness of the description and according to a preferred but by no means limitative embodiment, the device is described with reference to an opening and closing control for roofs of motor-vehicles or the like, provided with sliding carriages (24) having rotating levers (13) with circular serrated sectors which engage racks (27) integral with said carriages.

According to this structure, pins (12) provided at the end of the circular serrated sector (14) levers (13), besides engaging in the axial slots (9) provided on the shaped levers (5) supporting roof (1), extend outwards (80).

With reference to the closing manoeuvre of roof (1), each mobile carriage (24) is caused to slide forwards, towards the front part of the vehicle or the like on whose roof it is applied. During the sliding, and due to the stops of the front rails (11) provided with side slides (15), carriages (24) cause the downwards rotation of the circular serrated sectors (14) of levers (13), which engage racks (27).

Levers (13) rotate around their fulcrum pin (26), whereby the end pins lower, dragging along the shaped levers (5) which support and lock roof (1).

Once the lowering of roof (1) is almost completed, the end extensions (80) of pins (12) of levers (13), engage one of the stress raiser openings (84) of grooves (81) realized or inserted on the fixed side walls of sections (20) constituting the support and guide structures of the opening and closing device for motor-vehicle roofs.

In the continuance of the sliding of the mobile carriages (24), extensions (80) enter stress raisers (84) and start sliding along the upper walls (85) of downwards sloping or horizontal flat grooves (81), with connected or sloping stress raiser (85').

During such translation, the extensions shift therefore also downwards, dragging along both the shaped levers (5) engaged through pins (12) in slots (9) and roof (1), engaged with the shaped levers (5). In this way, roof (1) is closed, pressed against the peripheral tight-gaskets (56) and safely locked through the engagement of extensions (80) in grooves (81).

The contrary rotatory motion of carriages (24) permits the contrary operation of release, raising and opening of roof (1).

The conceptual simplicity and the location of the hooking means near the devices for moving roofs (1) facilitate the construction of the assemblies, make them more practical and economic and ensure a secure safety hooking.

According to what has been described and illustrated, it should be stressed that the hooking device can be utilized either in form of a double structure for each carriage (24), as seen, or of a single structure, on either side of each carriage, whereby the hooking safety is always ensured. In other possible solutions in which it might be necessary or suitable to realize a higher or exasperated hooking safety, the number of the above devices can be increased.

In these cases, it suffices to provide the hooking devices with side plates (82), which, by means of through-holes (8), engage extensions (80) of pins (12) of levers (13) and slide on the side edges of the shaped levers (5). One or more protruding small pins (83) are provided on the side plates (82), which pins, following analogous motions of extensions (80) and being engaged with them and sliding in the same way with respect to the shaped levers (5), engage as many stress raisers (84') and grooves (81'), realized or inserted on the fixed sections (20).

Said plates (82) with protruding small pins (83) and the corresponding grooves (81)' with inlets (84') may be provided either on both opposite sides of the shaped levers (5), as shown in drawing (4), or on only one of said sides.

As can be noticed, the hooking devices subject matter of this invention are realized near and in association with the mobile carriages (24), which are placed, with respect to the whole of the openable roof (1) and in function of the maximum raising excursion of the latter caused by the rotation of the circular serrated sector (14) levers (13), in the front part, before the ideal centre line of the opening corresponding to the roof.

Such conditon is valid and sufficient, however non limitative, even with the use of the side plates (82).

This invention, while being described and illustrated with special reference to an opening and closing device of roofs (1) provided with mobile carriages (24) having circular serrated sectors 814) levers (13), can also be advantageously utilized for whatever other opening and closing device in which at least a pin or a mobile side extension, either principal or secondary, engageable in side sloping fixed grooves, is either available or realizable.

## Claims

1. A locking device for an opening and closing means for motor-vehicle roofs and the like, said opening and closing means being provided with sliding carriages (24) having rotating levers (13) moving shaped levers (5) supporting the roof (1), said locking device comprising at least one pin (80) cooperating (engaging) with a corresponding fixed side groove (81) provided with a stress raiser (84) and with an upper internal wall (85) which is horizontal flat and connected to a sloping stress raiser (85'), characterized in that the pin (80) is an extension of a transverse end pin (12) of the rotating lever (13), and the groove (81) is realized on the side walls of sections (20) constituting the support and guide structure of the opening and closing means.

2. The locking device according to claim 1, characterized in that it is located in the front half of the open compartment occupied by roofs.

3. The locking device according to claim 1 or 2, characterized in that it is provide on one or both sides of the sliding carriage (24).

4. The locking device according to anyone of the preceeding claims, characterized in that a side plate (82) is engaged to each extension (80) of the transverse end pin (12), said plate (82) having at least one protruding pin (83) cooperating (engaging) with a corresponding groove (81') provided with a stress raiser (84') and with an upper internal wall (85) which is horizontal flat and connected to or sloping stress raiser, said groove (81') being realized on the side wall of the section (20) constituting the support and guide structure of the opening and closing means.

5. The locking device according to claim 4, characterized in that the side plate (82) and the corresponding groove (81') are provided on one side or on both opposite sides of the sliding carriage (24).-

## Patentansprüche

1. Verriegelungsvorrichtung für eine Öffnungs- und Schließeinrichtung für Autodächer und dergleichen, wobei die Öffnungs- und Schließeinrichtung mit Gleitschlitten (24) versehen ist, welche sich drehende Hebel (13) aufweisen, die das Dach (1) tragende geformte Hebel (5) bewegen, wobei die Verriegelungsvorrichtung wenigstens einen Stift (80) umfaßt, der mit einer entsprechenden fixierten Seitenausnehmung (81) (in sie eingreifend) zusammenwirkt, welche mit einem Spannungserhöher (84) und mit einer oberen Innenwand (85) versehen ist, die horizontal eben und mit einem schrägen Spannungserhöher (85') verbunden ist,
dadurch gekennzeichnet, daß der Stift (80) eine Erstreckung eines Querstiftes (12) des sich drehenden Hebels (13) ist, und daß die Ausnehmung (81) an den Seitenwänden von Abschnitten (20) realisiert ist, welche die Stütz- und Führungsstruktur der Öffnungs- und Schließeinrichtung bilden.

2. Verriegelungsvorrichtung nach Anspruch 1, dadurch gekennzeichnet, daß sie in der Fronthälfte des von dem Dach besetzten offenen Abteiles angeordnet ist.

3. Verriegelungsvorrichtung nach Anspruch 1 oder 2, dadurch gekennzeichnet, daß sie an einer oder beiden Seiten des Gleitschlittens (24) angeordnet ist.

4. Verriegelungsvorrichtung nach einem der vorhergehenden Ansprüche, dadurch gekennzeichnet, daß eine Seitenplatte (82) mit jeder Erstreckung (80) des Querstiftes (12) in Eingriff steht, daß diese Platte (82) wenigstens einen abragenden Stift (83) aufweist, welcher mit einer entsprechenden Ausnehmung (81') (eingreifend) zusammenwirkt, die mit einem Spannungserhöher (84') und mit einer oberen Innenwand (85) versehen ist, die horizontal eben und mit einem schrägen Spannungserhöher verbunden ist, wobei die Ausnehmung (81') an der Seitenwand des Abschnittes (20) vorgesehen ist, welcher die Stütz- und Führungsstruktur der Öffnungs- und Schließeinrichtung bildet.

5. Verriegelungsvorrichtung nach Anspruch 4, dadurch gekennzeichnet, daß die Seitenplatte (82) und die entsprechende Ausnehmung (81') an einer oder an beiden gegenüberliegenden Seiten des Gleitschlittens (24) angeordnet sind.

## Revendications

1. Dispositif de verrouillage pour un moyen d'ouverture et de fermeture de toits de véhicules à moteurs ou analogues, ledit moyen d'ouverture et de fermeture étant muni de chariots mobiles (24) comportant des leviers rotatifs (13) qui actionnent des leviers profilés (5) qui supportent le toit (1), ledit dispositif de verrouillage comprenant au moins une saillie (80) qui coopère avec une rainure latérale correspondante fixe (81) munie d'un élévateur de contrainte (84), et d'une paroi interne supérieure (85) horizontalement plane et reliée à un élévateur de contrainte incliné (85'),
caractérisé en ce que la saillie (80) est un prolongement d'un axe transversal d'extrémité (12) du levier rotatif (13), et que la rainure (81) est agencée sur les parois latérales de sections (20) qui constituent la structure de support et de guidage du moyen d'ouverture et de fermeture.

2. Dispositif de verrouillage selon la revendication 1,
caractérisé en ce qu'il est disposé dans la moitié antérieure du compartiment ouvert occupé par le toit.

3. Dispositif de verrouillage selon la revendication 1 ou 2,
caractérisé en ce qu'il est prévu sur un côté ou sur les deux côtés du chariot mobile (24).

4. Dispositif de verrouillage selon l'une quelconque des revendications précédentes,
caractérisé en ce qu'une plaque latérale (82) coopère avec chaque saillie (80) de l'axe latéral d'extrémité (12), ladite plaque (82) présentant au moins un axe en saillie (83) qui coopère avec une rainure correspondante (81') munie d'un élévateur de contrainte (84') et d'une paroi interne supérieure (85) horizontalement plane et reliée à un élévateur de contrainte incliné, ladite rainure (81') étant agencée dans la paroi latérale de la section (20) qui constitue la structure de support et de guidage du moyen d'ouverture et de fermeture.

5. Dispositif de verrouillage selon la revendication 4,
caractérisé en ce que la plaque latérale (82) et la rainure correspondante (81') sont prévues sur un côté ou sur les deux côtés opposés du chariot mobile (24).
